# EUROPÄISCHE PATENTSCHRIFT

(11) **EP 1 787 562 B1**
(45) Veröffentlichungstag und Bekanntmachung des Hinweises auf die Patenterteilung: **16.09.2015**
(21) Anmeldenummer: 06003723.1
(22) Anmeldetag: 23.02.2006
(51) Int. Cl.: A47L 9/14, B01D 46/00, B01D 46/02

(54) **Stutzen mit Ablenkvorrichtung für einen Staubsauger**
Nozzle with deflection device for a vacuum cleaner
Raccord avec dispositif de déviation pour un aspirateur

(30) Priorität: 22.11.2005 EP 05025480; 09.12.2005 EP 05027013
(43) Veröffentlichungstag der Anmeldung: 23.05.2007
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- EP-A- 1 685 784
- EP-A1- 1 068 828
- BE-A- 529 649
- DE-U1- 8 811 821
- US-A- 2 068 332
- US-A- 4 469 498
- US-A- 5 039 324
- US-A- 5 180 103

## Beschreibung

Die Erfindung betrifft einen Stutzen für einen Staubsauger, mit dem die Standzeit eines Staubsaugerfilterbeutels im Staubsauger erhöht wird.

Stutzen bilden ein Verbindungsglied zwischen dem Schlauch und dem Gehäuse eines Staubsaugers, so dass über den Schlauch angesaugte Luft in einen, im Staubsaugergehäuse angeordneten Staubsaugerfilterbeutel strömen kann. Beispielsweise offenbart die DE 44 39 416 einen Anschlussstutzen für einen Staubsauger mit einem mit dem Motorgehäuse verbindbaren Stutzen und einer an den Stutzen nach außen anschließenden, ca. 90° betragenden Umlenkung.

Ein Ziel bei der Entwicklung im Staubsaugerbereich besteht darin, die Staubsauger und/oder darin einzusetzende Staubsaugerfilterbeutel so zu verbessern, dass ein Staubsauger über eine lange Zeit mit hoher Leistung und gutem Saugverhalten betrieben werden kann. Entsprechende Verbesserungen werden häufig durch Weiterentwicklungen der Staubsaugerfilterbeutel erreicht.

So ist beispielsweise aus der EP 0 960 645 ein Staubsaugerfilterbeutel mit einer Filterstruktur bekannt, bei der in Richtung des Luftstroms aus dem Beutelinnern nach außen ein Grobfilter vor einem Feinfilter angeordnet ist. Der Grobfilter weist eine hohe Staubspeicherkapazität auf, so dass Staubpartikel in seinen Poren über die gesamte Dicke eingelagert werden. Auf diese Weise kann ein Verstopfen des Filtermaterials verzögert und damit die Standzeit des Beutels erhöht werden.

Aus der WO 93/21812 ist ein Staubsaugerfilterbeutel bekannt, bei dem auf der der Eingangsöffnung gegenüber liegenden Beutelwand eine Schutzschicht aus einem widerstandsfähigen Material vorgesehen ist. Dadurch wird verhindert, dass die der Einlassöffnung des Beutels gegenüber liegende Beutelwand durch die mit hoher Geschwindigkeit direkt auftreffende Partikel beschädigt wird.

Eine Filterbeutelbefestigung mit einem Schmutzabfänger ist aus der US 4,469,498 bekannt. Die US 2,068,332 zeigt ein Verfahren und eine Vorrichtung zum Sammeln von Staub aus einem Luftstrom. Die US 5,180,103 offenbart eine Sprühdüse für ein Flüssigkeitsverteilsystem. Aus der DE 88 11 521 ist ein Anschlussstück eines Filtersacks bekannt.

Die BE 529649 offenbart ein Verschlusselement für die Öffnung in einem Staubsaugerbeutel, wobei das Verschlusselement als flexibles Band in Form einer Schleife ausgebildet sein kann. In der GB 815,709 ist ein Staubsaugerbeutel offenbart, der in seinem Innern eine Tasche enthält, die zusammenfällt, sobald der Staubsauger nicht in Betrieb ist.

Angesichts der aus dem Stand der Technik bekannten Staubsauger und Staubsaugerfilterbeutel ist es die Aufgabe der vorliegenden Erfindung, den Stand der Technik derart zu verbessern, dass ein Staubsauger über einen längeren Zeitraum mit hoher Staubsaugerleistung betrieben werden kann.

Diese Aufgabe wird gelöst durch einen Stutzen für einen Staubsauger gemäß Anspruch 1.

Erfindungsgemäß wird ein Stutzen für einen Staubsauger mit einer Ablenkvorrichtung und einer Verbindungsvorrichtung zum Verbinden der Ablenkvorrichtung mit einem Anschlussstutzen, der seinerseits einen Filterbeutel mit einem Saugrohr des Staubsaugers verbindet, wobei die Verbindungsvorrichtung und die Ablenkvorrichtung derart ausgebildet sind, dass die Ablenkvorrichtung beim Betrieb des Staubsaugers im Inneren des Filterbeutels angeordnet ist, und dass ein in die Verbindungsvorrichtung eintretender Luftstrom in der Ablenkvorrichtung abgelenkt wird oder ablenkbar ist, wobei die Verbindungsvorrichtung und die Ablenkvorrichtung als ein Spritzgussteil einstückig ausgebildet sind, und wobei die Ablenkvorrichtung zum Aufteilen des Luftstroms in wenigstens zwei Teilströme mit unterschiedlichen Strömungsrichtungen ausgebildet ist, bereitgestellt.

Es hat sich überraschenderweise herausgestellt, dass eine derartige staubsaugerseitige Modifikation die Standzeit eines Staubsaugerfilterbeutels signifikant erhöht. Insbesondere wurde festgestellt, dass der sich in einem Filterbeutel bildende Filterkuchen erheblich zum Filtrationsverhalten des Filterbeutels beiträgt. Durch die erfindungsgemäß vorgesehene Ablenkvorrichtung des Stutzens wird im Betrieb des Staubsaugers ein in einen Filterbeutel eintretender Luftstrom durch die Ablenkvorrichtung abgelenkt und in den Staubsaugerfilterbeutel geführt, so dass die mitgeführten Partikel gleichmäßig im Innern verteilt werden und folglich eine homogene Verteilung des sich bildenden Filterkuchens und damit eine erhöhte Standzeit erhalten wird. Insbesondere kann die Ablenkvorrichtung wenigstens eine Austrittsöffnung aufweisen, durch die ein abgelenkter Luftstrom in den Staubsaugerfilterbeutel austreten kann.

Bei dem erfindungsgemäßen Stutzen tritt die Luft mit einer Strömungsrichtung über die Verbindungsrichtung durch eine Eintrittsöffnung der Ablenkvorrichtung in diese ein und wird darin abgelenkt, so dass eine Änderung der Strömungsrichtung in der Ablenkvorrichtung bezüglich der Strömungsrichtung in der Verbindungsrichtung, insbesondere an der Eingangsöffnung der Verbindungsvorrichtung, eintritt. Unter der Strömungsrichtung des Luftstroms oder Luftströmungsrichtung ist die Hauptströmungsrichtung der Luft gemeint, die im Allgemeinen parallel der Wandung, beispielsweise eines Staubsaugerschlauches oder Stutzens, verläuft. Im Betrieb des Staubsaugers ergibt sich eine derartige Hauptströmungsrichtung an jedem Punkt durch den Staubsaugerschlauch bis in den Beutel, auch wenn an einzelnen Stellen ggf. Verwirbelungen auftreten können.

Die Ablenkvorrichtung hat weiterhin den Vorteil, dass im Luftstrom mitgeführte Partikel nicht ungehindert und mit großer Geschwindigkeit auf die der Einlassöffnung gegenüberliegende Wand des Filterbeutels prallen und diese zerstören.

Durch die Aufteilung in zwei oder mehr Teilströme wird eine noch gleichmäßigere Verteilung des Filterkuchens in dem Staubsaugerfilterbeutel erreicht. Außerdem ist die Zahl der Partikel pro Teilchenstrom im Vergleich mit dem eintretenden Luftstrom verringert, was die Belastung der Beutelwände durch die einzelnen Teilströme reduziert.

Ein Anschlussstutzen kann auf verschiedene Art vorgesehen sein. Beispielsweise ist der Anschlussstutzen fest mit dem Staubsaugergehäuse verbunden und derart ausgebildet und angeordnet, dass er im Betrieb des Staubsaugers in eine Einlassöffnung eines Staubsaugerfilterbeutels eingreift oder auf eine Halteplatte eines Staubsaugerfilterbeutels aufsetzt, wobei ein beiden Fällen eine dichte Verbindung gebildet wird. Der Anschlussstutzen kann auch Teil eines Saugrohrs oder Saugschlauchs des Staubsaugers sein. Der Begriff Saugrohr umfasst hier auch Saug- bzw. Staubsaugerschläuche.

Die Ablenkvorrichtung kann insbesondere zum Aufteilen des Luftstroms in wenigstens zwei Teilströme mit einander entgegengesetzten Strömungsrichtungen ausgebildet sein. Einander entgegengesetzt bedeutet, dass beide Strömungsrichtungen eine Komponente in der Ebene senkrecht zur Strömungsrichtung mit der ein Luftstrom in die Ablenkvorrichtung eintritt, d.h. senkrecht zur Eintrittsströmungsrichtung, aufweisen, wobei die Komponenten einen Winkel von etwa 180° einschließen, und wobei die Komponenten in dieser Ebene jeweils größer sind als die entsprechende Komponente parallel zur Eintrittsströmungsrichtung. Dies bedeutet, dass (in vektorieller Betrachtung der Strömungsrichtung) die zwei Teilströmungsrichtungen in der senkrechten Projektion in die Ebene senkrecht zur Eintrittsströmungsrichtung antiparallel angeordnet sind.

Die Ablenkvorrichtung kann eine Eintrittsöffnung für einen Luftstrom aufweisen und wenigstens eine, vorzugsweise plane, der Eintrittsöffnung gegenüber liegende Ablenkfläche umfassen. Durch eine derartige Ablenk- oder Prallfläche lässt sich insbesondere die Geschwindigkeit der Partikel in geeigneter Weise reduzieren. Eine der Eintrittsöffnung der Ablenkvorrichtung gegenüber liegende Ablenkfläche kann insbesondere von dieser einen Abstand bzw. einen mittleren Abstand von zwischen 1 cm und 15 cm, insbesondere 2 cm bis 5 cm, aufweisen.

Die wenigstens eine Ablenkfläche kann in einem vorherbestimmten Winkel relativ zur Ebene der Eintrittsöffnung angeordnet sein.

Durch eine geeignete Wahl des Winkels kann die Ablenkung des Luftstroms an unterschiedliche Parameter, wie Staubsaugermotorleistung, Anordnung des Staubsaugerfilterbeutels bzw. dessen Geometrie und Dimensionierung, Einströmwinkel, etc. angepasst und optimiert werden. Bei einer parallel zur Ebene der Eintrittsöffnung angeordneten Ablenkfläche wird eine senkrecht zur Ebene der Eintrittsöffnung einströmende Luftströmung um bis zu etwa 90° umgelenkt oder abgelenkt, was eine besonders günstige Verteilung der Partikel und des daraus resultierenden Filterkuchens im Staubsaugerfilterbeutel zur Folge hat. Insbesondere kann die Ablenkfläche senkrecht zur Eintrittsströmungsrichtung angeordnet sein.

Vorzugsweise kann die wenigstens eine Ablenkfläche eine größere Fläche als die Fläche der Eintrittsöffnung aufweisen. Damit wird weitgehend vermieden, dass der Luftstrom lediglich um die Ablenkfläche herumgelenkt wird und danach aber mit im Wesentlichen unveränderter Strömungsgeschwindigkeit auf die der Eintrittsöffnung gegenüber liegenden Beutelwand trifft. Jede Ablenkfläche kann eine Fläche von 15 cm² bis 100 cm², insbesondere 40 cm² bis 60 cm², aufweisen.

Die Ablenkvorrichtung kann wenigstens eine Ablenkfläche umfassen, wobei die wenigstens eine Ablenkfläche derart ausgebildet ist, dass sie bei einer Projektion parallel zur Strömungsrichtung beim Eintritt in die Ablenkvorrichtung und/oder Verbindungsvorrichtung in die Ebene senkrecht zu dieser Strömungsrichtung die Eintrittsöffnung überdeckt. Durch eine derartige Überdeckung der Eintrittsöffnung kann eine möglichst vollständige Ablenkung des gesamten eintretenden Luftstroms erzielt werden.

Die zuvor beschriebenen Ablenkvorrichtungen können derart ausgebildet sein, dass ein in die Verbindungsvorrichtung und/oder in die Ablenkvorrichtung eintretender Luftstrom in der Ablenkvorrichtung um wenigstens etwa 45°, vorzugsweise wenigstens etwa 60°, weiter bevorzugt wenigstens etwa 80°, ablenkbar ist. Dies bedeutet, dass die Luftströmungsrichtung beim Austreten aus der Ablenkvorrichtung mit der Strömungsrichtung beim Eintreten in die Verbindungsvorrichtung und/oder beim Eintreten in die Ablenkvorrichtung einen Winkel von wenigstens 45° einschließt. Damit ergibt sich eine vorteilhafte Partikelströmung in den Staubsaugerfilterbeutel und eine günstige Verteilung des Filterkuchens.

Die Ablenkvorrichtung der zuvor beschriebenen Stutzen kann die Form eines Zylinders oder Kegelstumpfs umfassen, der in der Deckfläche eine Eintrittsöffnung und in der Seitenwandung wenigstens eine Austrittsöffnung aufweist.

Durch eine derartige Form wird ein stabiler Aufbau der Ablenkvorrichtung erzielt, wobei gleichzeitig durch die der Eintrittsöffnung gegenüber liegende Grundfläche eine geeignete Ablenk- oder Prallfläche zur Umlenkung des Luftstroms gebildet wird. Durch die Verwendung einer Kegelstumpfform wird erreicht, dass die Fläche der Ablenkfläche (Grundfläche des Kegelstumpfs) eine größere Fläche als die Fläche der Eintrittsöffnung aufweist.

Bei diesen Formen der Ablenkvorrichtung kann jede Austrittsöffnung in der Seitenwandung einen Winkelbereich von wenigstens 60°, vorzugsweise wenigstens 90°, am meisten bevorzugt wenigstens 120°, einnehmen.

Dieser Winkelbereich wird dabei in einer Ebene parallel zur Grundfläche und ausgehend von einer senkrecht dazu stehenden Mittelachse gemessen. Durch Austrittsöffnungen mit einer solchen Dimensionierung kann ein Stau und eine Verstopfung an den Öffnungen vermieden werden.

Alternativ kann die Ablenkvorrichtung die Form eines Quaders oder eines Pyramidenstumpfs umfassen, der in der Deckfläche eine Eintrittsöffnung und in wenigstens einer Seitenwand eine Austrittsöffnung aufweist. Durch die Quader- oder Pyramidenstumpfform wird ein alternativer stabiler Aufbau der Ablenkvorrichtung erreicht.

Dabei kann insbesondere jede Austrittsöffnung im wesentlichen eine gesamte Seitenfläche des Quaders oder Pyramidenstumpfs einnehmen. Auf diese Weise wird vermieden, dass sich in einer Ecke des Quaders oder Pyramidenstumpfs größere Mengen an Saugstaubpartikel ansammelt.

Bei den zuvor beschriebenen Ablenkvorrichtungen können insbesondere wenigstens zwei sich gegenüber liegende Austrittsöffnungen vorgesehen sein.

Durch diese wenigstens zwei Austrittsöffnungen wird einerseits erreicht, dass der Luftstrom in zwei Teilströme aufgeteilt wird, und andererseits, dass diese zwei Teilströme entgegengesetzte Richtungen aufweisen, was insgesamt zu einer sehr homogenen Verteilung des Filterkuchens im Staubsaugerfilterbeutel führt.

Jede Austrittsöffnungen der zuvor beschriebenen Stutzen kann wenigstens die gleiche Fläche wie die der Eintrittsöffnung aufweisen. Damit wird ein Luftstau an den Austrittsöffnungen vermieden, was die Gefahr von Partikelansammlungen an den Austrittsöffnungen verringert.

Die Ablenkvorrichtung der zuvor beschriebenen Stutzen kann eine Eintrittsöffnung aufweisen und derart ausgebildet sein, dass sie von einer ersten Stellung in eine zweite Stellung bringbar ist, in der die Eintrittsöffnung verschlossen ist. Auf diese Weise kann vermieden werden, dass im Staubfilterbeutel vorhandene Partikel über die Ablenkvorrichtung aus dem Filterbeutel austreten.

Insbesondere kann die Ablenkvorrichtung derart ausgebildet sein, dass sie durch einen Saugluftstrom von der ersten Stellung in die zweite Stellung bringbar ist. Damit wird sichergestellt, dass die Eintrittsöffnung der Ablenkvorrichtung während des Betriebs, bei dem ein Saugluftstrom vorhanden ist, nicht verschlossen ist.

Weiterhin kann die Ablenkvorrichtung ein Federelement umfassen, das auf einen Teil der Ablenkvorrichtung eine Rückstellkraft derart ausübt, dass die Ablenkvorrichtung in Abhängigkeit von einem Saugluftstrom von der zweiten Stellung in die erste Stellung bringbar ist.

Ein solches Federelement ermöglicht, dass die Ablenkvorrichtung beim Nachlassen des Saugluftstroms, beispielsweise wenn der Staubsauger ausgeschaltet wird, aus der ersten Stellung wieder in die zweite Stellung mit verschlossener Eintrittsöffnung übergeht.

Die Ablenkvorrichtung kann ein im Wesentlichen luftundurchlässiges Material umfassen. Dies hat den Vorteil, dass der Luftstrom und die mitgeführten Partikel im Wesentlichen vollständig abgelenkt werden, so dass sich insbesondere auf der Ablenkvorrichtung keine Partikelablagerungen bilden.

Das Material der Ablenkvorrichtung kann ein Kunststoff, insbesondere ein Elastomer, ein trocken- oder nassgelegtes Vlies oder Papier, insbesondere Pappe, oder eine Folie umfassen. Auch andere Materialien sind möglich; insbesondere ist eine ausreichende Steifigkeit des Materials von Vorteil, damit die Ablenkvorrichtung durch den Luftstrom nicht übermäßig bewegt wird.

Der gesamte Stutzen kann als ein Spritzgussteil ausgebildet sein.

Die zuvor beschriebenen Stutzen können weiterhin eine Halteplatte umfassen, die zur Halterung eines Staubsaugerfilterbeutels an einer Halteeinrichtung in einem Staubsaugergehäuse ausgebildet ist.

Die Halteplatte kann mit der Verbindungsvorrichtung oder Anschlussvorrichtung und/oder der Ablenkvorrichtung nicht-zerstörungsfrei lösbar verbunden sein. Dies ermöglicht eine stabile Konstruktion und eine einfache Herstellung des Stutzens. Beispielsweise kann die Verbindungsvorrichtung oder Anschlussvorrichtung und die Halteplatte oder der gesamte Stutzen einstückig, zum Beispiel als Spritzgussteil, ausgebildet sein.

Die zuvor beschriebenen Stutzen können weiterhin ein Anschlusselement umfassen, das zum zerstörungsfrei lösbaren Verbinden des Stutzens mit einem Staubsaugerfilterbeutel ausgebildet ist. Ein derartiges Anschlusselement ermöglicht ein einfaches Vorsehen des Stutzens. Wenn der Stutzen eine Halteplatte umfasst, kann das Anschlusselement mit dieser, insbesondere nicht-zerstörungsfrei lösbar, verbunden sein. Beispielsweise kann die Halteplatte und das Anschlusselement einstückig ausgebildet sein.

Das Anschlusselement kann beispielsweise ein Gewinde oder ein Klettverschlusselement umfassen. Somit kann der Stutzen mit einem beliebigen Staubsaugerfilterbeutel, der eine dem Anschlusselement entsprechendes Anschlussgegenelement aufweist, verbunden werden. Weist der Stutzen eine Halteplatte und ein Anschlusselement auf kann auf diese Weise ein Stutzen mit einem beliebigen Filterbeutel verbunden werden. Ein derartiger Stutzen erfüllt somit außerdem eine Adapterfunktion. Alternative Anschlusselemente sind beispielsweise Klemmverschluss- oder Schnappverschlusselemente.

Ein Staubsaugerfilterbeutel kann ein Anschlussgegenelement umfassen, das zum zerstörungsfrei lösbaren Verbinden des Staubsaugerfilterbeutels mit dem zuvor beschriebenen Stutzen mit Anschlusselement ausgebildet ist. Das Anschlussgegenelement kann mit dem Filtermaterial im Bereich der Einlassöffnung nicht zerstörungsfrei lösbar verbunden, beispielsweise verklebt oder verschweißt, sein.

Das Anschlussgegenelement kann beispielsweise ein Gewinde oder ein Klettverschlusselement sein. Wenn beispielsweise der Stutzen eine Halteplatte mit einem Außengewinde umfasst, kann der Staubsaugerfilterbeutel ein entsprechendes Innengewinde umfassen.

Die Erfindung stellt insbesondere einen Staubsauger mit einem zuvor beschriebenen Stutzen und einem Anschlussstutzen bereit, wobei die Verbindungsvorrichtung derart ausgebildet ist, dass sie mit dem Anschlussstutzen des Staubsaugers nicht-zerstörungsfrei lösbar verbunden ist.

Bei einem derartigen Staubsauger können wenigsten zwei aus der Gruppe aus Verbindungsvorrichtung, Ablenkvorrichtung und der Anschlussstutzen einstückig ausgebildet sein. Die einstückige Ausbildung kann als Spritzgussteil erfolgen. Insbesondere können Verbindungsvorrichtung, Ablenkvorrichtung und Anschlussstutzen als ein Spritzgussteil ausgebildet sein.

Die Verbindungsvorrichtung kann alternativ derart ausgebildet sein, dass sie mit dem Anschlussstutzen des Staubsaugers zerstörungsfrei lösbar verbindbar ist. Auf diese Weise lässt sich der Stutzen insbesondere als Nachrüst- oder Ersatzteil einsetzen, da er damit auch nachträglich in einem Staubsauger vorgesehen werden kann. Insbesondere kann die Verbindungsvorrichtung zerstörungsfrei lösbar über eine kraftschlüssige oder eine formschlüssige Verbindung mit dem Anschlussstutzen verbindbar sein. Es kann sich beispielsweise um eine Schraub-, Keil-, Stift- oder Schnappverbindung handeln.

Weitere Merkmale und Vorteile der Erfindung werden nachfolgend an Hand der in den Figuren illustrierten Ausführungsbeispielen näher erläutert.

Dabei zeigt
- Figur 1: ein Beispiel einer Ablenkvorrichtung eines Stutzens;
- Figur 2: eine Querschnittsansicht eines Stutzens in einem Staubsaugergehäuse;
- Figuren 3, 4: verschiedene Ausführungsbeispiele von Stutzen und Ablenkvorrichtungen;
- Figur 5: eine Querschnittsansicht eines weiteren Stutzens in einem Staubsaugergehäuse;
- Figur 6: einen Stutzen an einem Staubsaugerschlauch;
- Figur 7: eine Querschnittsansicht eines Stutzens an einem Staubsaugerschlauch;
- Figur 8: eine Querschnittsansicht eines weiteren Stutzens in einem Staubsaugergehäuse;
- Figur 9: eine Querschnittsansicht eines Stutzens mit einer Halteplatte.

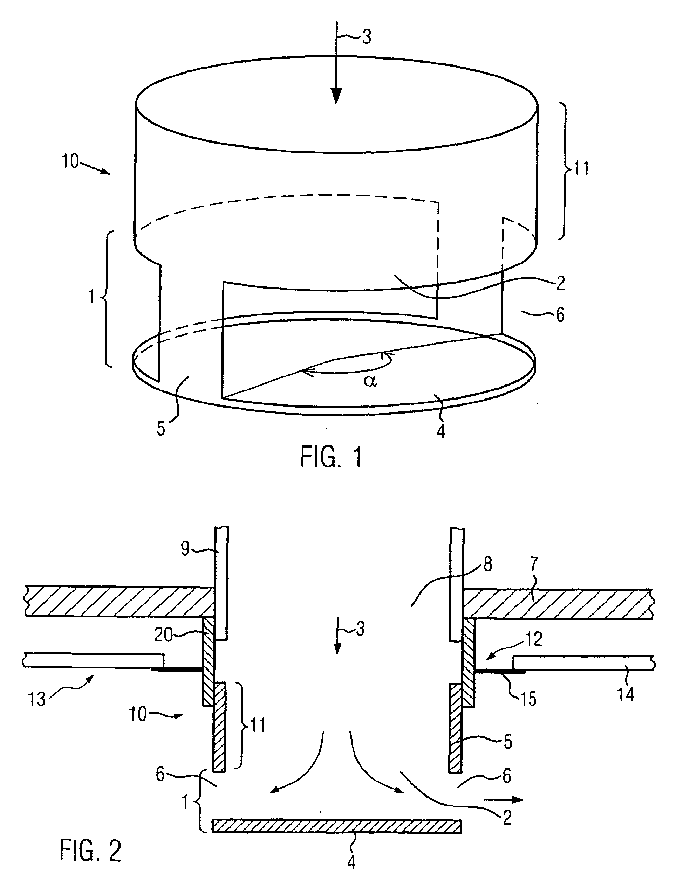

In Figur 1 ist beispielhaft ein zylinderförmiger Stutzen 10 für einen Staubsauger mit einer Ablenkvorrichtung 1 und einer Verbindungsvorrichtung 11 schematisch gezeigt. Der gezeigte Stutzen kann als Nachrüstelement für herkömmliche Staubsauger bereitgestellt werden.

Im Betrieb des Staubsaugers mit einem solchen Stutzen tritt ein Luftstrom mit einer Strömungsrichtung, die schematisch mit dem Pfeil 3 angedeutet ist, in die Verbindungsvorrichtung 11 ein. Die Verbindungsvorrichtung 11 dient dazu, eine Verbindung des Stutzens 10 mit einem (nicht gezeigten) Anschlussstutzen eines Staubsaugers herzustellen. Die Ablenkvorrichtung 1 weist eine Eintrittsöffnung 2 auf, in die ein Luftstrom aus der Verbindungsvorrichtung des Stutzens in die Ablenkvorrichtung eintritt.

Gegenüber der Eintrittsöffnung 2 und parallel zur Ebene der Eintrittsöffnung ist eine plane Ablenkfläche 4 angeordnet, die durch die Grundfläche des Zylinders gebildet wird. In der Seitenwandung 5 der zylinderförmigen Ablenkvorrichtung 1 sind zwei gegenüberliegende Austrittsöffnungen 6 vorgesehen. Durch eine derartige Konfiguration der Ablenkvorrichtung wird ein in die Verbindungsvorrichtung eintretender Luftstrom in der Ablenkvorrichtung 1 in zwei Teilströme aufgeteilt, die relativ zur Strömungsrichtung beim Eintritt in die Verbindungsvorrichtung um etwa 90° abgelenkt sind und durch die Austrittsöffnungen 6 in einen (nicht gezeigten) Staubsaugerfilterbeutel strömen. Bei der gezeigten Ausführungsform überdeckt die Ablenkfläche 4 senkrecht projiziert auf die Ebene senkrecht zur Strömungsrichtung 3 beim Eintritt in die Verbindungsvorrichtung (also in die Ebene der Eintrittsöffnung 2), genau die Eintrittsöffnung 2.

In dem gezeigten Beispiel ist der Stutzen 10 einstückig ausgebildet, beispielsweise als Spritzgussteil. In Luftströmungsrichtung 3 endet die Verbindungsvorrichtung 11 direkt über der Oberkante der Austrittsöffnungen 6. Die Seitenwandung 5 der Ablenkvorrichtung 1 umfasst somit oberhalb der Austrittsöffnungen 6 lediglich noch einen schmalen Randbereich.

In Figur 1 ist der von der vorderen Austrittsöffnung eingenommene Winkel α angegeben. Dieser kann insbesondere zwischen 90° und 170° liegen, vorzugsweise wenn zwei Austrittsöffnungen vorgesehen sind. Vorzugsweise können alle Austrittsöffnungen den gleichen Winkel einnehmen und symmetrisch zur Zylinderachse angeordnet sein. Alternativ kann auch nur eine Austrittsöffnung vorgesehen sein, wobei diese dann insbesondere einen Winkel von wenigstens 180° einnehmen kann. Weiterhin kann jede Austrittsöffnung wenigstens die gleiche Fläche wie die der Eintrittsöffnung aufweisen, um Staubpartikelansammlungen an den Austrittsöffnungen zu vermeiden.

Die Höhe der Ablenkvorrichtung kann zwischen 1 cm und 15 cm, insbesondere zwischen 1 cm und 5 cm, und der Durchmesser zwischen 1 cm und 15 cm, vorzugsweise 3 cm und 8 cm liegen. Als Material kann beispielsweise ein Kunststoff oder Pappe verwendet werden.

In Figur 2 ist die Anordnung eines Stutzens 10, wie er in Figur 1 gezeigt ist, in einem Staubsaugergehäuse in Querschnittsansicht schematisch gezeigt. In der Wandung 7 eines Staubsaugergehäuses ist eine Öffnung 8 zur Aufnahme eines Anschlussstücks 9 eines Saugrohrs oder eines Staubsaugerschlauchs vorgesehen. Ein solches Anschlussstück 9 kann in die Öffnung 8 gesteckt werden und dort beispielsweise mit einem Schnappverschluss fixiert werden. Damit steckt das Anschlussstück 9 dann auch in dem staubsaugerseitig vorgesehenen Anschlussstutzen 20 des Staubsaugers.

Der Anschlussstutzen 20 ist mit der Wandung 7 des Staubsaugergehäuses verbunden, beispielsweise verklebt. Alternativ kann der Anschlussstutzen 20 auch einstückig mit der Wandung 7 ausgebildet sein. Als weitere Alternative kann der Anschlussstutzen 20 auch zerstörungsfrei lösbar an der Wandung 7 angeordnet sein, indem er beispielsweise mit dieser verschraubt ist. Der Anschlussstutzen 20 greift in die Einlassöffnung 12 eines Staubsaugerfilterbeutels 13 ein.

In dem gezeigten Beispiel umfasst der Staubsaugerfilterbeutel 13 ein Filtermaterial 14, das, beispielsweise wie in der EP 0 960 645 beschrieben, mehrlagig ausgebildet sein kann. An der Einlassöffnung 12 des Filterbeutels 13 ist weiterhin eine Dichtung 15 angeordnet, die mit dem Filtermaterial 14 beispielsweise verklebt oder verschweißt ist. Das Dichtungsmaterial 15 erlaubt ein Abdichten der Einlassöffnung um die Verbindungsvorrichtung 11 herum. Die Dichtung 15 kann beispielsweise aus einem flexiblen Kunststoff oder einer Folie bestehen. Herkömmlicherweise wird der Filterbeutel über eine (nicht gezeigte) Halteplatte, die an dem Beutel befestigt ist, in dem Staubsaugergehäuse gehaltert. Das Dichtungsmaterial 15 kann somit alternativ auch die Öffnung der Halteplatte umgebend an dieser befestigt sein.

Der Stutzen 10 kann in verschiedenster Weise mit dem Anschlussstutzen 20 verbunden sein. So kann der Stutzen 10 beispielsweise außen auf den Anschlussstutzen 20 gesteckt oder geschraubt sein. Alternativ kann die Ablenkvorrichtung auch in den Anschlussstutzen 20 gesteckt (wie in der Figur dargestellt) oder geschraubt sein. Weiterhin ist es möglich, den Anschlussstutzen und den Stutzen miteinander zu verkleben oder zu verschweißen. Eine weitere Alternative besteht darin, den Anschlussstutzen und den Stutzen einstückig, beispielsweise als Spritzgussteil, auszubilden.

Der Stutzen 10 umfasst eine Verbindungsvorrichtung 11 und eine Ablenkvorrichtung 1. Die Verbindungsvorrichtung 11 mündet in Strömungsrichtung 3 in die Eintrittsöffnung 2 der Ablenkvorrichtung 1.

Im Betrieb des Staubsaugers wird durch ein Staubsaugerrohr oder einen Staubsaugerschlauch ein Luftstrom angesaugt. Die Strömungsrichtung dieses Luftstroms verläuft insbesondere innerhalb des Staubsaugerschlauchs oder -rohrs parallel zur Wandung. Bei dem in Figur 2 gezeigtem Beispiel ist die Strömungsrichtung auch beim Eintreten in das Staubsaugergehäuse und den Anschlussstutzen parallel zur Wandung sowohl des Anschlussstücks 9 als auch des Anschlussstutzens 20, wie durch den Pfeil 3 schematisch angezeigt wird, auch wenn lokal an einzelnen Stellen des Luftstroms Verwirbelungen auftreten können.

Durch die Ablenkfläche oder Prallfläche 4 der Ablenkvorrichtung 1 wird der Luftstrom in zwei Teilströme aufgeteilt, deren Strömungsrichtungen an den Austrittsöffnungen 6, wie durch entsprechende Pfeile angedeutet, um etwa 90° bezüglich der Strömungsrichtung beim Eintritt in die Verbindungsvorrichtung 11 gedreht ist.

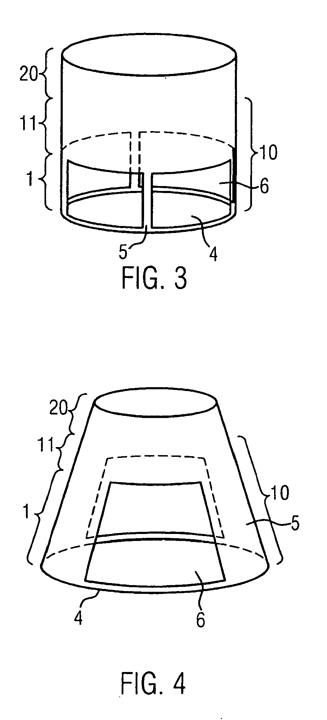

In den Figuren 3 und 4 sind schematisch weitere Beispiele von Stutzen oder Ablenkvorrichtungen gezeigt.

Figur 3 illustriert einen zylinderförmigen Stutzen 10, der einstückig mit einem Anschlussstutzen 20 ausgebildet ist. Der Stutzen 10 weist eine zylindrische Ablenkvorrichtung 1 mit vier Austrittsöffnungen 6 auf, die bezüglich der Zylinderachse symmetrisch in der Seitenwandung 5 ausgebildet sind. In dem gezeigten Beispiel umfasst die Seitenwandung 5 der Ablenkvorrichtung 1 vier schmale Stege.

In dem gezeigten Beispiel sind Verbindungsvorrichtung 11 und Ablenkvorrichtung 1 einstückig ausgebildet. Es kann sich beispielsweise um ein Spritzgussteil handeln. Ein solcher Stutzen 10 mit Anschlussstutzen 20 kann mit einem Staubsaugergehäuse oder einem Staubsaugerschlauch, insbesondere nicht-zerstörungsfrei lösbar, verbunden sein.

Eine weitere Alternative eines Stutzens 10 ist in Figur 4 schematisch gezeigt. Hier weist die Ablenkvorrichtung 1 die Form eines Kegelstumpfes auf. In der Seitenwandung 5 sind zwei Austrittsöffnungen 6 vorgesehen. Wie im Fall einer zylinderförmigen Ablenkvorrichtung können auch in einem solchen Ausführungsbeispiel die Austrittsöffnungen einen vorherbestimmten Winkel einnehmen und/oder symmetrisch zur Kegelachse angeordnet sein. In diesem Beispiel ist ebenfalls der Stutzen 10 mit dem Anschlussstutzen 20 einstückig ausgebildet.

In allen Ausführungsbeispielen können alternativ auch nur eine Austrittsöffnung oder mehr als zwei Austrittsöffnungen vorgesehen sein.

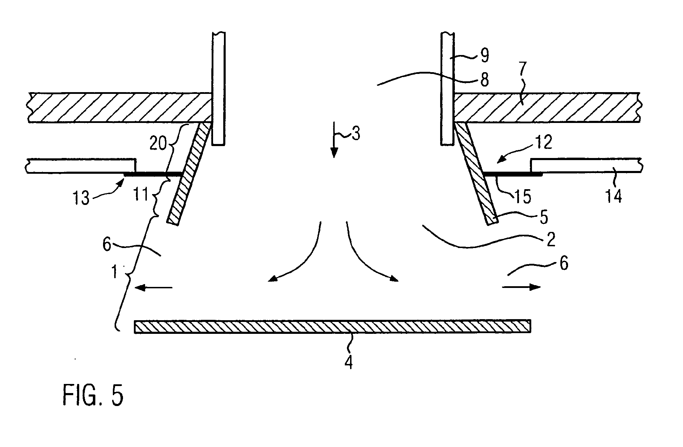

Ein kegelstumpfförmiger Stutzen 10 ist in Figur 5 illustriert. In dem in Figur 5 gezeigten Beispiel sind der Stutzen 10 und der Anschlussstutzen 20 einstückig ausgebildet, wobei der Anschlussstutzen in die Einlassöffnung 12 des Staubsaugerfilterbeutels 13 eingreift und durch die Dichtung 15 abgedichtet wird. Der Anschlussstutzen 20 ist mit der Wandung 7 eines Staubsaugergehäuses verbunden. In die Öffnung 8 der Wandung 7 kann ein Anschlussstück 9 eines Staubsaugerschlauchs gesteckt werden. Der Anschlussstutzen kann mit der Gehäusewandung 7 zerstörungsfrei oder nicht-zerstörungsfrei lösbar verbunden sein.

Die Verbindungsvorrichtung 11 mündet in eine Eintrittsöffnung 2 einer ebenfalls kegelstumpfförmig ausgebildeten Ablenkvorrichtung 5. In dem gezeigten Beispiel sind die Verbindungsvorrichtung 11 und die damit verbundene Ablenkvorrichtung 1 einstückig ausgebildet.

Ein durch die Eintrittsöffnung 2 der Ablenkvorrichtung 1 eintretender Luftstrom mit Strömungsrichtung 3 wird auf Grund der Ablenkfläche 4 abgelenkt und strömt in zwei Teilströmen durch die Austrittsöffnungen 6 in den Staubsaugerfilterbeutel 13.

Die Fläche der Ablenkfläche 4 ist so gewählt, dass die Ablenkvorrichtung 1 durch die Einlassöffnung 12 des Staubsaugerfilterbeutels in diesen eingebracht werden kann. Dabei ist die Dichtung 15 aus einem entsprechend flexiblen und geeignet dimensionierten Material vorgesehen, so dass der Anschlussstutzen in die Einlassöffnung eingreift und durch die Dichtung 15 abgedichtet wird. Bei dieser kegelstumpfförmigen Ausgestaltung des Stutzens 10 und insbesondere der Ablenkvorrichtung 1 ist die Fläche der Ablenkfläche 4 größer als die Fläche der Eintrittsöffnung 2.

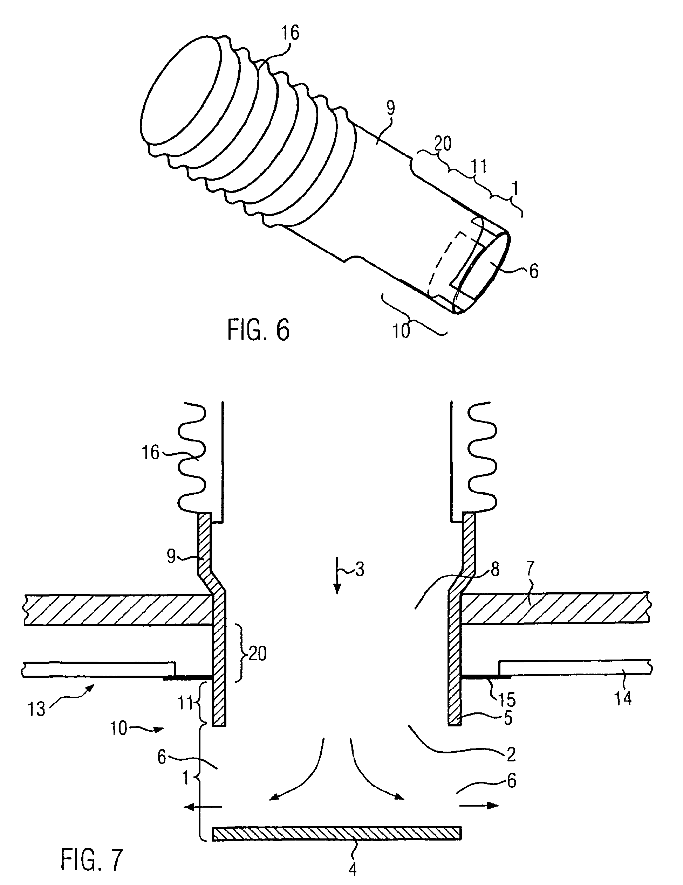

Als weiteres Beispiel zeigt Figur 6 einen Stutzen 10, der über einen Anschlussstutzen 20 mit dem Anschlussstück 9 eines Saugrohrs oder eines Staubsaugerschlauchs 16 verbunden ist. In dem gezeigten Beispiel sind das Anschlussstück 9, der Anschlussstutzen 20, und die Ablenkvorrichtung 1 sowie die Verbindungsvorrichtung 11 des Stutzens 10 einstückig ausgebildet. Alternativ können jedoch beispielsweise Anschlussstück 9, Anschlussstutzen 20 und/oder Verbindungsvorrichtung 11 jeweils zerstörungsfrei lösbar miteinander verbunden sein.

Wie in Figur 7 schematisch in Querschnittsansicht gezeigt, wird das Anschlussstück 9, der Anschlussstutzen 20 und der Stutzen 10 in eine Öffnung 8 in der Wandung 7 des Staubsaugergehäuses eingebracht. Die Verbindung mit der Wandung kann beispielsweise durch eine Steckverbindung oder über einen Schnappverschluss (nicht gezeigt) erfolgen. Der Anschlussstutzen 20 greift in die Einlassöffnung 12 des Staubsaugerfilterbeutels ein und mündet in den Stutzen 10.

Im Betrieb des Staubsaugers wird ein angesaugter und durch die Eintrittsöffnung 2 in die Ablenkvorrichtung 1 eintretender Luftstrom auf Grund der Ablenkfläche 4 abgelenkt und tritt, im Vergleich mit der Strömungsrichtung in der Verbindungsvorrichtung, um etwa 90° abgelenkt aus den Austrittsöffnungen 6 in den Staubsaugerfilterbeutel 13 aus.

Im Folgenden wird, dem besseren Verständnis der Erfindung dienend, ein Beispiel eines Stutzens beschrieben, bei dem die Ablenkvorrichtung derart ausgebildet ist, dass sie ihre Eintrittsöffnung verschließen kann. Dabei nimmt die Ablenkvorrichtung einmal eine erste Stellung ein, in der sie geöffnet ist, so dass ein durch die Eintrittsöffnung der Ablenkvorrichtung eintretender Luftstrom ablenkbar und durch Austrittsöffnungen in den Staubsaugerfilterbeutel austretbar ist. In einer zweiten Stellung ist die Eintrittsöffnung der Ablenkvorrichtung jedoch verschlossen.

In dem Beispiel umfasst der Stutzen eine zylinderförmige Verbindungsvorrichtung, die über einen Anschlussstutzen mit der Wandung des Staubsaugergehäuses verbunden ist, wobei der Anschlussstutzen in die Einlassöffnung des Staubsaugerfilterbeutels eingreift.

Mit dieser Verbindungsvorrichtung ist eine zylinderförmige Ablenkvorrichtung verbunden.

Die Seitenwandung der Ablenkvorrichtung umfasst ein Elastomer, durch das auf diese Weise ein Federelement gebildet wird. Insbesondere kann die Seitenwandung aus dem Elastomer bestehen, so dass die gesamte Seitenwandung ein Federelement bildet. Die Seitenwandung ist weiterhin mit einer Ablenkfläche verbunden (beispielsweise verklebt), die beispielsweise eine größere Fläche als die Fläche der Eintrittsöffnung aufweist und diese somit überdeckt.

Die Elastomer-Seitenwandung ist derart ausgebildet und mit der Verbindungsvorrichtung verbunden, dass die Ablenkfläche in einer zweiten Stellung die Eintrittsöffnung verschließt. Dies kann dadurch erreicht werden, dass die Elastomer-Seitenwandung in der zweiten Stellung leicht gespannt ist, so dass die Rückstellkraft des Elastomers die Ablenkfläche senkrecht zur Ablenkfläche an die Wandung der Verbindungsvorrichtung drückt.

In Betrieb des Staubsaugers wird ein Luftstrom angesaugt, durch den die Rückstellkraft der Seitenwandung überwunden wird. Die Ablenkvorrichtung, insbesondere ihre Ablenkfläche, wird durch die Saugluft mit einer Kraft beaufschlagt, dass die Elastomer-Seitenwandung senkrecht zur Ablenkfläche weiter gedehnt wird. Dadurch wird die Ablenkfläche von der Eintrittsöffnung wegbewegt, so dass diese geöffnet wird.

In dem Beispiel kann die Verbindungsvorrichtung zylinderförmig und die Ablenkfläche kreisförmig ausgebildet sein. Die Seitenwandung kann im wesentlichen lediglich aus zwei schmalen Stegen bestehen, so dass die zwei resultierenden Austrittsöffnungen einen weiten Winkelbereich einnehmen.

Sobald der Saugluftstrom nachlässt, so dass die Rückstellkraft der elastomeren Seitenwandung nicht mehr überwunden wird, kehrt die Ablenkfläche wieder in die zweite Stellung zurück und verschließt die Eintrittsöffnung.

Alternativ zu diesem Beispiel kann die Fläche der Ablenkfläche auch im Wesentlichen der Fläche der Eintrittsöffnung entsprechen. Andererseits ist es auch möglich, eine über die Seitenwandung hinausragende Ablenkfläche bereitzustellen.

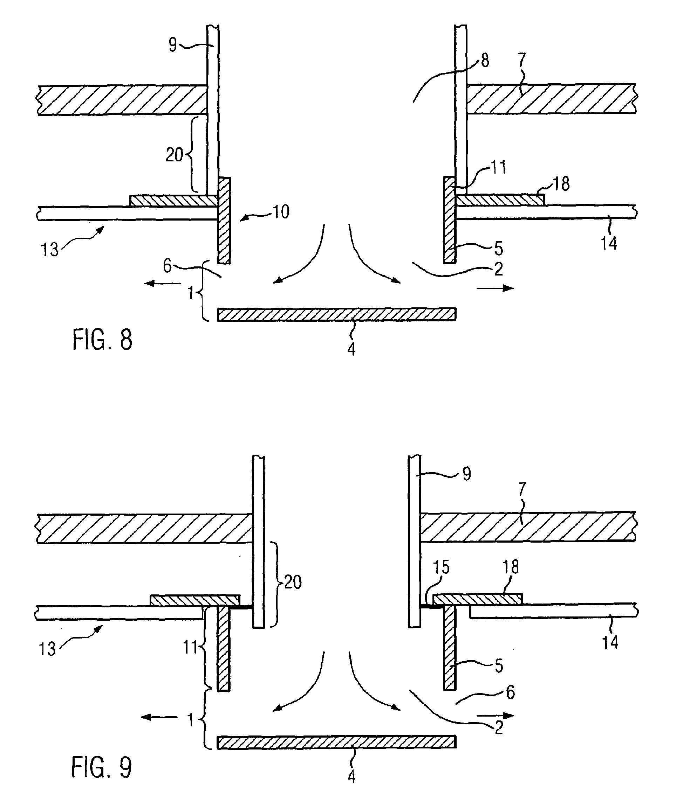

In Figur 8 ist ein weiteres Beispiel eines Stutzens 10 für einen Staubsauger schematisch gezeigt. An der Außenseite des Staubsaugerfilterbeutels 13 ist im Bereich der Einlassöffnung eine Halteplatte 18 vorgesehen. Ein mit dem Staubsaugergehäuse verbundener Anschlussstutzen 20 wird im Betrieb auf die Halteplatte 18 aufgesetzt. Der Staubsaugerfilterbeutel 13 mit der Halteplatte 18 und der Anschlussstutzen 20 sind derart angeordnet und ausgebildet, dass zwischen Halteplatte 18 und Anschlussstutzen 20 eine dichte Verbindung entsteht. Beispielsweise kann an der Halteplatte in dem Bereich, in dem der Anschlussstutzen aufsetzt, ein flexibles Dichtmaterial (nicht gezeigt), beispielsweise aus einem Schaumstoff oder einem Elastomer, vorgesehen sein. Alternativ kann der Anschlussstutzen 20 selbst an seinem dem Staubsaugerfilterbeutel 13 zugewandten Ende ein flexibles Material aufweisen.

In dem Beispiel von Fig. 8 sind die Ablenkvorrichtung 1 und die Verbindungsvorrichtung 11 einstückig ausgebildet. Der derart gebildete einstückige Stutzen 10 steckt in dem Anschlussstutzen 20. Insbesondere kann der Stutzen 10 zerstörungsfrei lösbar mit dem Anschlussstutzen 20 und damit mit dem Staubsaugergehäuse 7 verbunden sein. Alternativ kann der Stutzen 10 beispielsweise auch mit dem Anschlussstutzen 20 verklebt sein. Die Verbindungsvorrichtung 11 greift in die Einlassöffnung des Staubsaugerfilterbeutels 13 ein.

Figur 9 illustriert ein Ausführungsbeispiel, in dem der Stutzen 10 eine Halteplatte 18 umfasst. Ein Anschlussstück 9 eines Staubsaugerrohrs geht in einen Anschlussstutzen über, der in eine Einlassöffnung der Halteplatte 18 mündet und mit einem Dichtungsmaterial 15 abgedichtet wird.

Das Dichtungsmaterial 15 kann mit der Halteplatte 18 beispielsweise verklebt oder verschweißt sein.

Die Verbindungsvorrichtung 11 des Stutzens 10 ist mit der Halteplatte 18 nicht zerstörungsfrei lösbar verbunden. Beispielsweise sind die Verbindungsvorrichtung 11 und die Halteplatte 18 verklebt. Alternativ können Verbindungsvorrichtung 11 und Halteplatte 18 einstückig als ein Spritzgusssteil ausgebildet sein. Insbesondere kann der gesamte Stutzen 10 als ein Spritzgusssteil ausgebildet sein. Die Verbindungsvorrichtung 11 greift in die Einlassöffnung des Staubsaugerfilterbeutels 13 ein.

Die Halteplatte 18 und der Filterbeutel 13 sind zerstörungsfrei lösbar miteinander verbunden. Dazu kann beispielsweise das Filtermaterial 14 im Bereich der Einlassöffnung als Anschlusselement ein Klettverschlusselement (nicht gezeigt) aufweisen, das beispielsweise aufgeklebt ist; die Halteplatte 18 kann ihrerseits an der dem Filtermaterial zugewandten Seite ein entsprechendes Anschlussgegenelement in Form eines Klettverschlusselements aufweisen, so dass ein Klettverschluss gebildet wird. Alternativ kann auf dem Filtermaterial 14 die Einlassöffnung umgebend ein Innengewinde befestigt sein; die Halteplatte 18 kann auf der dem Filtermaterial 14 zugewandten Seite ein entsprechendes Außengewinde aufweisen, so dass der Stutzen 10 und der Filterbeutel 13 über eine Schraubverbindung miteinander verbunden werden. Die Halteplatte 18 mit dem Außengewinde kann als ein Spritzgussteil ausgebildet sein.

Die zuvor beschriebenen Merkmale wie sie teilweise in den Figuren gezeigt werden können auch in anderer Weise miteinander kombiniert werden.

## Patentansprüche

1. Stutzen (10) für einen Staubsauger mit
einer Ablenkvorrichtung (1) und
einer Verbindungsvorrichtung (11) zum Verbinden der Ablenkvorrichtung (1) mit einem Anschlussstutzen (20), der seinerseits einen Filterbeutel mit einem Saugrohr des Staubsaugers verbindet, wobei
die Verbindungsvorrichtung (11) und die Ablenkvorrichtung (1) derart ausgebildet sind, dass die Ablenkvorrichtung (1) beim Betrieb des Staubsaugers im Inneren des Filterbeutels (13) angeordnet ist, und dass ein in die Verbindungsvorrichtung (11) eintretender Luftstrom in der Ablenkvorrichtung (1) abgelenkt wird
wobei die Ablenkvorrichtung (1) zum Aufteilen des Luftstroms in wenigstens zwei Teilströme mit unterschiedlichen Strömungsrichtungen ausgebildet ist,
**dadurch gekennzeichnet, dass**
die Verbindungsvorrichtung (11) und die Ablenkvorrichtung (1) als ein Spritzgussteil einstückig ausgebildet sind.

2. Stutzen nach Anspruch 1, wobei die Ablenkvorrichtung (1) zum Aufteilen des Luftstroms in wenigstens zwei Teilströme mit einander entgegengesetzten Strömungsrichtungen ausgebildet ist.

3. Stutzen nach einem der vorangegangenen Ansprüche, wobei die Ablenkvorrichtung (1) eine Eintrittsöffnung (2) für einen Luftstrom aufweist und wenigstens eine, vorzugsweise plane, der Eintrittsöffnung (2) gegenüberliegende Ablenkfläche (4) umfasst.

4. Stutzen nach Anspruch 3, wobei die wenigstens eine Ablenkfläche (4) in einem vorherbestimmten Winkel relativ zur Ebene der Eintrittsöffnung (2) angeordnet ist.

5. Stutzen nach Anspruch 3 oder 4, wobei die wenigstens eine Ablenkfläche (4) eine gleich große oder größere Fläche als die Fläche der Eintrittsöffnung (2) aufweist.

6. Stutzen nach einem der vorangegangenen Ansprüche, wobei die Ablenkvorrichtung (1) derart ausgebildet ist, dass ein in die Verbindungsvorrichtung (11) und/oder in die Ablenkvorrichtung (1) eintretender Luftstrom in der Ablenkvorrichtung (1) um wenigstens 45°, vorzugsweise wenigstens 60°, weiter bevorzugt wenigstens 80°, ablenkbar ist.

7. Stutzen nach einem der vorangegangenen Ansprüche, wobei die Ablenkvorrichtung (1) die Form eines Zylinders oder Kegelstumpfs umfasst, der in der Deckfläche eine Eintrittsöffnung (2) und in der Seitenwandung wenigstens eine Austrittsöffnung (6) aufweist.

8. Stutzen nach Anspruch 7, wobei jede Austrittsöffnung (6) in der Seitenwandung einen Winkelbereich von wenigstens 60°, vorzugsweise wenigstens 90°, am meisten bevorzugt wenigstens 120°, einnimmt.

9. Stutzen nach einem der Ansprüche 1 - 8, wobei die Ablenkvorrichtung (1) die Form eines Quaders oder eines Pyramidenstumpfes umfasst, der in der Deckfläche eine Eintrittsöffnung (2) und in wenigstens einer Seitenwand eine Austrittsöffnung (6) aufweist.

10. Stutzen nach Anspruch 9, wobei jede Austrittsöffnung (6) im Wesentlichen eine gesamte Seitenfläche einnimmt.

11. Stutzen nach einem der vorangegangenen Ansprüche, wobei wenigstens zwei sich gegenüberliegende Austrittsöffnungen (6) vorgesehen sind.

12. Stutzen nach einem der vorangegangenen Ansprüche, wobei die Ablenkvorrichtung (1) eine Eintrittsöffnung (2) aufweist und derart ausgebildet ist, dass sie von einer ersten Stellung in eine zweite Stellung bringbar ist, in der die Eintrittsöffnung (2)verschlossen ist.

13. Stutzen nach Anspruch 12, wobei die Ablenkvorrichtung (1) derart ausgebildet ist, dass sie durch einen Saugluftstrom von der zweiten Stellung in die erste Stellung bringbar ist.

14. Stutzen nach Anspruch 12 oder 13, wobei die Ablenkvorrichtung (1) ein Federelement umfasst, das auf einen Teil der Ablenkvorrichtung (1) eine Rückstellkraft derart ausübt, dass die Ablenkvorrichtung (1) in Abhängigkeit von einem Saugluftstrom von der ersten Stellung in die zweite Stellung bringbar ist.

15. Stutzen nach einem der vorangegangenen Ansprüche, wobei die Ablenkvorrichtung (1) ein im wesentlichen luftundurchlässiges Material umfasst.

16. Stutzen nach einem der vorangegangenen Ansprüche, wobei das Material der Ablenkvorrichtung (1) einen Kunststoff, insbesondere einen Thermoplast, ein trocken- oder nassgelegtes Vlies oder Papier, insbesondere Pappe, oder eine Folie umfasst.

17. Stutzen nach einem der vorangegangenen Ansprüche, wobei die Ablenkvorrichtung (1) zerstörungsfrei lösbar oder nicht-zerstörungsfrei lösbar mit der Verbindungsvorrichtung (11) verbunden ist.

18. Stutzen nach einem der vorangegangenen Ansprüche, weiterhin umfassend eine Halteplatte (18), die zur Halterung eines Staubsaugerfilterbeutels (13) an einer Halteeinrichtung in einem Staubsaugergehäuse ausgebildet ist.

19. Stutzen nach Anspruch 18, wobei die Halteplatte (18) mit der Verbindungsvorrichtung (11) (11)und/oder der Ablenkvorrichtung (1) nicht-zerstörungsfrei lösbar verbunden ist.

20. Stutzen nach einem der vorangegangenen Ansprüche, weiterhin umfassend ein Anschlusselement, das zum zerstörungsfrei lösbaren Verbinden des Stutzens mit einem Staubsaugerfilterbeutel (13) ausgebildet ist.

21. Staubsauger mit einem Stutzen nach einem der Ansprüche 1 - 20 und einem Anschlussstutzen, wobei die Verbindungsvorrichtung (11) derart ausgebildet ist, dass sie mit dem Anschlussstutzen des Staubsaugers nicht-zerstörungsfrei lösbar verbunden ist.

22. Staubsauger nach Anspruch 21, wobei wenigsten zwei aus der Gruppe aus Verbindungsvorrichtung (11), Ablenkvorrichtung (1) und der Anschlussstutzen einstückig ausgebildet sind.

## Claims

1. A nozzle (10) for a vacuum cleaner, comprising
a deflection device (1) and
a connection device (11) for connecting the deflection device (1) to a connection nozzle (20), which, in turn, connects a filter bag to a suction tube of the vacuum cleaner, wherein
the connection device (11) and the deflection device (1) are configured such that, when the vacuum cleaner is in operation, the deflection device (1) is arranged in the interior of the filter bag (13) and that an air current entering the connection device (11) is deflected in the deflection device (1),
wherein the deflection device (1) is configured for dividing the air current into at least two subcurrents having different directions of flow,
**characterized in that**
the connection device (11) and the deflection device (1) are formed integrally with one another as an injection molded part.

2. The nozzle according to claim 1, wherein the deflection device (1) is configured for dividing the air current into at least two subcurrents having opposite directions of flow.

3. The nozzle according to one of the preceding claims, wherein the deflection device (1) comprises an inflow opening (2) for an air current and at least one, preferably planar, deflection surface (4) located opposite the inflow opening (2).

4. The nozzle according to claim 3, wherein the at least one deflection surface (4) is arranged at a predetermined angle relative to the plane of the inflow opening (2).

5. The nozzle according to claim 3 or 4, wherein the at least one deflection surface (4) has an area which corresponds in size to or is larger than the area of the inflow opening (2).

6. The nozzle according to one of the preceding claims, wherein the deflection device (1) is configured such that an air current entering the connection device (11) and/or the deflection device (1) can be deflected in the deflection device (1) by at least 45°, preferably by at least 60°, more preferably by at least 80°.

7. The nozzle according to one of the preceding claims, wherein the deflection device (1) comprises the shape of a cylinder or of a truncated cone having an inflow opening (2) in the top surface and at least one outflow opening (6) in the sidewall

8. The nozzle according to claim 7, wherein each outflow opening (6) in the sidewall occupies an angular area of at least 60°, preferably of at least 90°, most preferably of at least 120°.

9. The nozzle according to one of the claims 1 to 8, wherein the deflection device (1) comprises the shape of a cuboid or of a truncated pyramid having an inflow opening (2) in the top surface and an outflow opening (6) in at least one sidewall.

10. The nozzle according to claim 9, wherein each outflow opening (6) occupies substantially an entire lateral surface.

11. The nozzle according to one of the preceding claims, wherein at least two opposed outflow openings (6) are provided.

12. The nozzle according to one of the preceding claims, wherein the deflection device (1) has an inflow opening (2) and is configured such that it is transferrable from a first position to a second position, at which the inflow opening (2) is closed.

13. The nozzle according to claim 12, wherein the deflection device (1) is configured such that it is transferrable from the second position to the first position by means of a suction air current.

14. The nozzle according to claim 12 or 13, wherein the deflection device (1) comprises a spring element exerting onto part of the deflection device (1) a restoring force in such a way that the deflection device (1) is transferrable from the first position to the second position in response to a suction air current.

15. The nozzle according to one of the preceding claims, wherein the deflection device (1) comprises a material that is substantially impermeable to air.

16. The nozzle according to one of the preceding claims, wherein the material of the deflection device (1) comprises a plastic material, especially a thermoplastic, a dry- or wet-laid nonwoven or paper, especially cardboard, or a sheet.

17. The nozzle according to one of the preceding claims, wherein the deflection device (1) is connected to the connection device (11) for release therefrom in a non-destructive manner or in a manner which is not non-destructive.

18. The nozzle according to one of the preceding claims, further comprising a retaining plate (18) configured for holding a vacuum cleaner filter bag (13) on a retaining means in a vacuum cleaner housing.

19. The nozzle according to claim 18, wherein the retaining plate (18) is connected to the connection device (11) and/or the deflection device (1) for release therefrom in a manner which is not non-destructive.

20. The nozzle according to one of the preceding claims, further comprising a connection element configured for connecting the nozzle and a vacuum cleaner filter bag (13) such that they can be released from one another in a non-destructive manner.

21. A vacuum cleaner, comprising a nozzle according to one of the claims 1 to 20 and a connection nozzle, wherein the connection device (11) is configured such that it is connected to the connection nozzle of the vacuum cleaner for release therefrom in a manner which is not non-destructive.

22. The vacuum cleaner according to claim 21, wherein at least two from the group of connection device (11), deflection device (1) and connection nozzle are formed integrally with one another.

## Revendications

1. Embout (10) pour un aspirateur, comprenant
un dispositif déflecteur (1) et
un dispositif de liaison (11) pour assurer la liaison du dispositif déflecteur (1) à un embout de raccordement (20), qui pour sa part relie un sac filtrant à un tube d'aspiration de l'aspirateur,
embout
dans lequel le dispositif de liaison (11) et le dispositif déflecteur (1) sont configurés de manière telle, que le dispositif déflecteur (1), lors du fonctionnement de l'aspirateur, soit situé à l'intérieur du sac filtrant (13), et qu'un flux d'air pénétrant dans le dispositif de liaison (11) soit dévié dans le dispositif déflecteur (1),
et dans lequel le dispositif déflecteur (1) est configuré pour subdiviser le flux d'air en au moins deux flux partiels avec des directions d'écoulement différentes,
**caractérisé**
**en ce que** le dispositif de liaison (11) et le dispositif déflecteur (1) sont réalisés d'un seul tenant en tant que pièce moulée par injection.

2. Embout selon la revendication 1, dans lequel le dispositif déflecteur (1) est configuré pour subdiviser le flux d'air en au moins deux flux partiels avec des directions d'écoulement mutuellement opposées.

3. Embout selon l'une des revendications précédentes, dans lequel le dispositif déflecteur (1) présente une ouverture d'entrée (2) pour un flux d'air, et au moins une surface déflectrice (4), de préférence plane, opposée à l'ouverture d'entrée (2).

4. Embout selon la revendication 4, dans lequel ladite au moins une surface déflectrice (4) est agencée selon un angle prédéterminé par rapport au plan de l'ouverture d'entrée (2).

5. Embout selon la revendication 3 ou la revendication 4, dans lequel ladite au moins une surface déflectrice (4) présente une surface de même grandeur ou plus grande que la surface de l'ouverture d'entrée (2).

6. Embout selon l'une des revendications précédentes, dans lequel le dispositif déflecteur (1) est configuré de manière à ce qu'un flux d'air pénétrant dans le dispositif de liaison (11) et/ou dans le dispositif déflecteur (1) peut être dévié dans le dispositif déflecteur (1) d'au moins 45°, de préférence d'au moins 60°, de façon plus préférée encore d'au moins 80°.

7. Embout selon l'une des revendications précédentes, dans lequel le dispositif déflecteur (1) présente la forme d'un cylindre ou d'un tronc de cône, qui comporte une ouverture d'entrée (2) dans la surface supérieure, et au moins une ouverture de sortie (6) dans la paroi latérale.

8. Embout selon la revendication 7, dans lequel chaque ouverture de sortie (6) occupe dans la paroi latérale une zone angulaire d'au moins 60°, de préférence d'au moins 90°, de façon la plus préférée d'au moins 120°.

9. Embout selon l'une des revendications 1 - 8, dans lequel le dispositif déflecteur (1) présente la forme d'un parallélépipède ou d'un tronc de pyramide, qui comporte une ouverture d'entrée (2) dans la surface supérieure et une ouverture de sortie (6) dans au moins une paroi latérale.

10. Embout selon la revendication 9, dans lequel chaque ouverture de sortie (6) occupe sensiblement une surface latérale complète.

11. Embout selon l'une des revendications précédentes, dans lequel sont prévues au moins deux ouvertures de sortie (6) mutuellement opposées.

12. Embout selon l'une des revendications précédentes, dans lequel le dispositif déflecteur (1) présente une ouverture d'entrée (2) et est configuré de manière à ce qu'il puisse être amené d'une première position à une deuxième position dans laquelle l'ouverture d'entrée (2) est fermée.

13. Embout selon la revendication 12, dans lequel le dispositif déflecteur (1) est configuré de manière à pouvoir être amené de la deuxième position à la première position par un flux d'air d'aspiration.

14. Embout selon la revendication 12 ou la revendication 13, dans lequel le dispositif déflecteur (1) comprend un élément de ressort, qui exerce une force de rappel sur une partie du dispositif déflecteur (1), de façon telle que le dispositif déflecteur (1) puisse être amené de la première position à la deuxième position en fonction d'un flux d'air d'aspiration.

15. Embout selon l'une des revendications précédentes, dans lequel le dispositif déflecteur (1) comprend un matériau sensiblement imperméable à l'air.

16. Embout selon l'une des revendications précédentes, dans lequel le matériau du dispositif déflecteur (1) comprend une matière plastique, notamment un thermoplastique, un non-tissé de fibres obtenu par voie sèche ou humide ou un papier, notamment du carton, ou une feuille.

17. Embout selon l'une des revendications précédentes, dans lequel le dispositif déflecteur (1) est relié au dispositif de liaison (11) de manière amovible non destructible, ou de manière amovible destructible.

18. Embout selon l'une des revendications précédentes, comprenant en outre une plaque de maintien (18), qui est configurée pour assurer le maintien d'un sac filtrant d'aspirateur (13) sur un dispositif de maintien dans un carter d'aspirateur.

19. Embout selon la revendication 18, dans lequel la plaque de maintien (18) est reliée au dispositif de liaison (11) et/ou au dispositif déflecteur (1) de manière amovible destructible.

20. Embout selon l'une des revendications précédentes, comprenant, en outre, un élément de raccordement, qui est configuré pour assurer une liaison amovible non destructible de l'embout avec un sac filtrant d'aspirateur (13).

21. Aspirateur comprenant un embout selon l'une des revendications 1 - 20 et un embout de raccordement, dans lequel le dispositif de liaison (11) est configuré de manière à être relié de manière amovible destructible à l'embout de raccordement de l'aspirateur.

22. Aspirateur selon la revendication 21, dans lequel au moins deux éléments parmi le groupe constitué du dispositif de liaison (11), du dispositif déflecteur (1) et de l'embout de raccordement sont réalisés d'un seul tenant.
